# FASCICULE DE BREVET EUROPEEN

(11) **EP 3 189 621 B1**
(45) Date de publication et mention de la délivrance du brevet: **27.04.2022**
(21) Numéro de dépôt: 15762964.3
(22) Date de dépôt: 02.09.2015
(51) Int. Cl.: H04L 12/18, H04L 29/06, H04N 21/61, H04N 21/6405, H04N 21/6408, H04W 4/06, H04W 4/08

(54) **PROCEDE ET SYSTEME DE GESTION DE LA CONVERSION UNICAST / MULTICAST POUR LES COMMUNICATIONS MULTIMEDIA DE GROUPE DANS LES RESEAUX DE TELECOMMUNICATION**
VERFAHREN UND SYSTEM ZUR VERWALTUNG DER UNICAST-/MULTICAST-UMWANDLUNG FÜR MULTIMEDIA-GRUPPENKOMMUNIKATIONEN IN TELEKOMMUNIKATIONSNETZWERKEN
METHOD AND SYSTEM FOR MANAGING THE UNICAST/MULTICAST CONVERSION FOR MULTIMEDIA GROUP COMMUNICATIONS IN TELECOMMUNICATION NETWORKS

(30) Priorité: 03.09.2014 FR 1401958
(43) Date de publication de la demande: 12.07.2017
(73) Titulaire: Thales, 92400 Courbevoie (FR)
(72) Inventeur: PHEMIUS, Kevin, F-92622 Gennevilliers Cedex (FR); LEGUAY, Jérémie, F-92622 Gennevilliers Cedex (FR); BOUET, Mathieu, F-92622 Gennevilliers Cedex (FR); KLECH, Guillaume, F-78141 Velizy Cedex (FR); LECANUET, Christophe, F-92622 Gennevilliers Cedex (FR)
(74) Mandataire: Marks & Clerk France
(86) Numéro de dépôt international: PCT/EP2015/070093
(87) Numéro de publication internationale: WO 2016/034650

(56) Documents cités:
- WO-A2-2006/036463
- US-A1- 2006 039 388

## Description

L'invention concerne un procédé et système de gestion de la conversion unicast - multicast pour les communications multimédia de groupe dans des réseaux de télécommunication. Elle concerne par exemple la gestion des communications voix sur IP, la gestion de flux vidéo, etc.

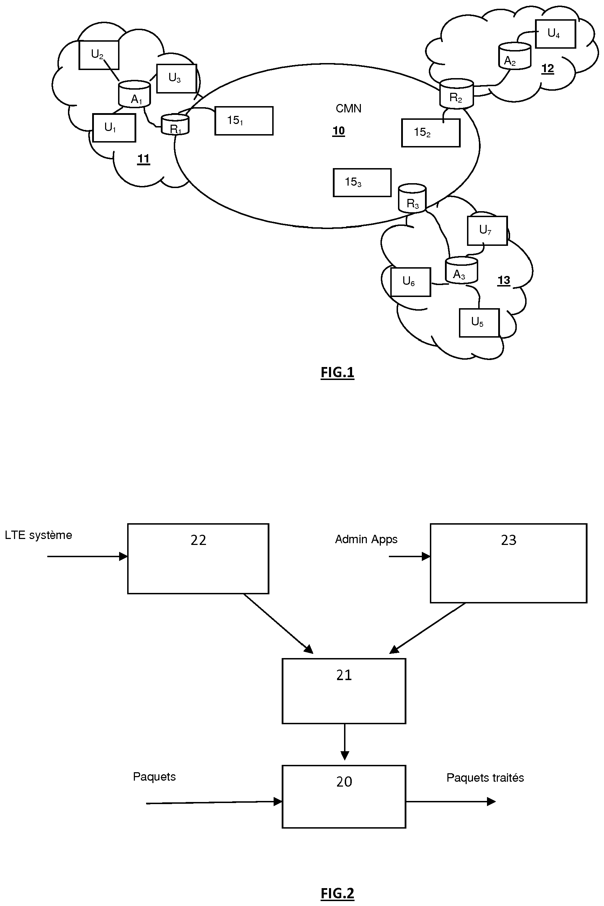

Les mécanismes de communication multidiffusion connus sous le terme anglo-saxon «multicast» permettent à une entité, typiquement un terminal utilisateur, d'envoyer des paquets simultanément à plusieurs autres entités, contrairement aux communications point-à-point ou en anglo-saxon « unicast ». La mise en place de communications de groupe en utilisant uniquement des communications point-à-point nécessiterait beaucoup plus de flux pour arriver à un résultat similaire à celui obtenu en utilisant le mécanisme multicast. En revanche, dans certaines configurations réseau, les terminaux ne peuvent émettre du trafic multicast eux-mêmes. C'est le cas de certains réseaux professionnels de radio mobile connus sous l'abréviation « PMR » pour Professional Mobile Radio, où différents sites d'accès du réseau mobile LTE (long Term Evolution) sont interconnectés au travers d'un réseau cœur. La figure 1 représente un exemple de réseau de communication 1 dans lequel un cœur CMN 10 permet la communication entre plusieurs sites PMR 11, 12, 13. Sur les sites d'accès LTE, le routeur de sortie de l'EPC LTE (Evolved Packet Core Long Term Evolution) A₁, A₂, A₃, sur la figure 1 agrège le trafic unicast, venant des terminaux mobiles Ui, selon des principes connus de l'homme du métier. Les routeurs de bordure, par exemple R₁, au niveau du premier site 11 communiquent avec les autres sites 12, 13, en utilisant le multicast, ils reçoivent les flux à transmettre et les mettent en forme avant transmission vers les autres sites.

Dans le cas de la voix sur IP (VoIP) dans les communications de groupe, un utilisateur appartient à un groupe donné et les paquets provenant d'un utilisateur sont transmis à tous les membres d'un groupe de communication qu'ils soient sur le même site que l'utilisateur émetteur ou sur un autre site distant. Le traitement unicast/multicast sur les routeurs d'accès au site, routeur de bordure, dépend donc de la répartition des utilisateurs sur les différents sites et de leur participation, appartenance, aux différents groupes. Les utilisateurs peuvent envoyer et recevoir du trafic sur plusieurs groupes en même temps. L'un des problèmes posés est donc pour N groupes de communication de pouvoir gérer les flux des utilisateurs en unicast et de les transformer en flux multicast pour les communications entre sites.

La plupart des solutions connues du demandeur traitent le problème au niveau applicatif en utilisant des serveurs multimédia sur chacun des sites. Ces serveurs reçoivent les flux unicast en provenance des utilisateurs présents sur leur site, puis communiquent avec les autres sites en utilisant des flux multicast. Cette conversion de type de flux au niveau applicatif induit des traitements importants sur les serveurs multimédia et se révèle difficile à mettre en œuvre.

La demande de brevet US 2013/0121133 décrit un mécanisme applicatif pour passer d'une communication multicast à une communication unicast en cas de perte de portée radio, le multicast ayant en général moins de portée pour ne pas surconsommer des ressources radio.

Le brevet US 6,970,926 divulgue un procédé de conversion unicast/multicast au travers d'un serveur applicatif.

La demande de brevet WO 2006/11022 décrit un procédé permettant la conversion au travers d'un serveur d'adaptation. Il permet à un utilisateur de communiquer en unicast sur un groupe multicast lorsque le multicast n'est pas disponible localement ou lorsque sa qualité locale est trop faible.

Le brevet US 6,259,701 décrit un système permettant à un client unicast de se connecter sur un serveur pour lister les groupes multicast disponibles dans le réseau cœur et de s'y inscrire. Le serveur peut alors donner les informations au client unicast pour recevoir les paquets et active sur le routeur de bordure la conversion unicast/multicast.

Dans le document WO 2006/036463 la conversion Multicast vers Unicast est utilisée pour réduire la charge réseau entre plusieurs sites et augmenter la sécurité. Le multicast est considéré comme une technique coûteuse et les firewalls gèrent mal le multicast.

La plupart des solutions techniques proposées dans l'art antérieur se trouvent au niveau applicatif et sont limitées dans le cas où le volume de paquets à traiter se révèle trop important.

L'idée de la présente invention consiste notamment à proposer une solution de traitement des paquets d'un flux multimédia au niveau réseau et non plus au niveau applicatif comme il est réalisé dans l'art antérieur. En fonctionnement normal, les paquets contenus dans un flux multimédia sont traités sans passer par un serveur de contenu.

Dans la description, on utilise indifféremment les termes paquets, données, pour désigner des informations contenues dans un flux de données émis par un utilisateur à transmettre vers d'autres utilisateurs. Le mot « uplink » désigne un flux entrant sur un site et le mot « downlink » un flux sortant d'un site.

L'invention concerne un système de gestion de la conversion unicast/multicast pour les communications multimédia de groupe dans un réseau de communication selon les revendications 1 à 6

L'invention concerne aussi un procédé de gestion de la conversion unicast/multicast pour les communications multimédia de groupe dans un réseau de communication selon les revendications 7 à 11.

D'autres caractéristiques et avantages de la présente invention apparaîtront mieux à la lecture de la description d'exemples de réalisation donnés à titre illustratif et nullement limitatif, annexée des figures qui représentent :
- La figure 1, un exemple de réseau de communication comprenant plusieurs sites communiquant entre eux grâce à la présence d'un réseau de cœur multicast,
- La figure 2, un diagramme représentant les modules présents sur un site et leur interconnexion,
- La figure 3, un exemple d'interactions entre un processeur de traitement de paquets et un contrôleur pour la mise en œuvre de l'invention,
- La figure 4 et la figure 5, un schéma de conversion de flux, et
- La figure 6, une application qui utilise le protocole OpenFlow.

La description qui suit est donnée à titre d'exemple illustratif pour des paquets de données voix sur IP.

La figure 1 schématise un exemple de réseau comprenant trois sites 11, 12, 13, contenant chacun plusieurs utilisateurs Ui, interconnectés par un réseau de cœur multicast 10 comprenant des moyens 15₁, 15₂, 15₃, de réception et de transmission des flux entrant et sortant.

Le premier site 11 comprend, par exemple, trois utilisateurs U₁, U₂, U₃; U₁, U₂ qui appartient à un premier groupe de communication G₁, U₃ est affilié à un deuxième groupe de communication G₂. Le premier site 11 comprend un routeur de bordure R₁ et une station de base A₁. Le routeur de bordure a notamment pour fonction de recevoir les flux de données, les mettre en forme pour leur transmission vers des utilisateurs appartenant au même groupe de communication, que ces utilisateurs appartiennent au même site ou à un site distant.

Le deuxième site 12 comporte un utilisateur U₄ affilié au deuxième groupe G₂, une station de base A₂, un routeur de bordure R₂.

Le troisième site 13 comporte trois utilisateurs U₅, U₆, U₇; U₆ est affilié au groupe de communication G₁, alors que les utilisateurs U₅ et U₇ sont affiliés à un troisième groupe de communication G₃. Le site 13 comporte aussi une station de base A₃ et un routeur de bordure R₃.

Un routeur de bordure est par exemple adapté à réaliser la conversion unicast/multicast selon des étapes du procédé selon l'invention qui vont être détaillées ci-après.

Au niveau de chaque routeur de bordure, pour un site donné, on trouve, selon l'exemple de la figure 2:
- Un processeur de paquets 20, adapté à traiter les paquets de données pour mettre en œuvre une action nécessaire à leur transmission vers d'autres utilisateurs, par exemple, la duplication de paquets vers des utilisateurs appartenant au même groupe de communication ou la modification de leur contenu afin qu'ils puissent être reçus par des utilisateurs d'autres groupes de communication, etc.,
- Un contrôleur 21, ayant notamment pour rôle d'implémenter la logique, les règles de traitement des paquets en fonction de leur appartenance au groupe de communication et de leur présence ou non sur le site d'un utilisateur émetteur, afin de configurer le processeur de paquets 20, en fonction d'informations et d'événements qu'il reçoit des modules suivants,
- Un module de gestion de présence 22 des utilisateurs qui comporte et maintient à jour une liste des utilisateurs présents sur le site ainsi que leurs identifiants, leurs adresses IP unicast par exemple. Ces informations peuvent être fournies par le système LTE et sont collectées lors de l'entrée d'un utilisateur ou terminal dans le réseau ou de son transfert via une procédure d'entrée connue sous l'expression anglo-saxonne hand-over et selon des étapes classiques,
- Un module de gestion de groupe 23 qui maintient la liste des utilisateurs participants aux différents groupes de communication.

Ces deux modules gestion de présence 22 et gestion de groupe 23 sont, par exemple, remis à jour au fur et à mesure du fait de la mobilité des utilisateurs dans le réseau de communication, appartenance à un groupe, changement de site, etc.

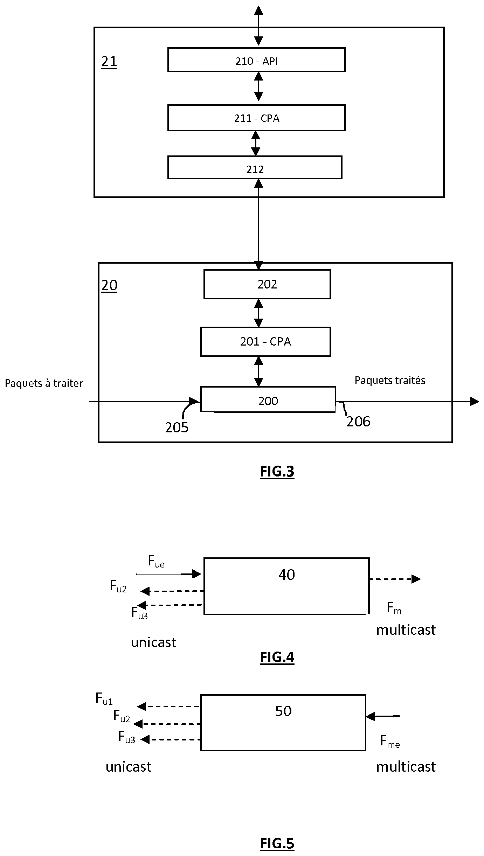

Le flux de données F(Uᵢ, Gₖ) à redistribuer d'un utilisateur émetteur Uᵢ vers les autres utilisateurs Uⱼ qui appartiennent à un même groupe Gₖ de communication et qui peuvent être sur le même site de l'utilisateur émetteur ou non est transmis directement vers le processeur de paquets 20 comme il va être décrit en relation avec la figure 3. Le processeur de paquets a reçu préalablement des règles de traitement des paquets.

La figure 3 explicite la composition et le fonctionnement des différents modules du contrôleur et du processeur de paquets.

Le contrôleur 21 est composé par exemple d'une interface de gestion, en anglo-saxon «management API » 210, qui permet de communiquer avec le gestionnaire de présence 22 et le gestionnaire de groupes 23, d'un agent du protocole de configuration 211 (connu sous l'abréviation anglo-saxonne « CPA » pour Configuration Protocol Agent) exécutant l'algorithme de génération de la configuration du processeur de paquets, par exemple des règles « OpenFlow », et d'un module 212 permettant la communication du contrôleur avec le processeur de paquets 20 et la transmission des configurations du système (utilisateurs, appartenance au groupe, règles...).

Le processeur de paquets 20 est composé, par exemple, d'un module de communication 202 (CPA) avec le contrôleur 21, d'un module de gestion des règles 201 décrivant l'ensemble des actions à effectuer sur les paquets de données entrant et qui correspondent à certains critères, et d'un module 200 de filtre et d'actions sur les paquets. Les actions à exécuter sur les paquets entrants sont, par exemple, la duplication d'un paquet, la modification éventuelle d'en-tête d'un paquet, la suppression de paquets, l'envoi d'un paquet sur un port de sortie, etc. Le processeur de paquets reçoit sur une entrée 205 les paquets à transmettre et réémet ces paquets modifiés ou dupliqués sur une sortie 206.

Les règles élaborées pour la conversion de flux de données sont schématisées sur les figures 4 et 5. Elles sont définies pour chaque site j, pour chaque communication de groupe Gi, au niveau du routeur du site et impliquent le contrôleur et le processeur de paquets.

La figure 4 schématise les opérations 40 pour convertir du trafic ou flux sortant d'un site, ou trafic « uplink », pour chaque communication de groupe.

Un flux unicast Fᵤₑ émis par un utilisateur Ui sur un site j et appartenant à un groupe Gₖ est dupliqué en plusieurs flux unicast Fᵤ₂, Fᵤ₃ vers les utilisateurs U₂, U₃, présents sur ce même site j et appartenant à un groupe Gₖ et il est converti en flux « multicast » Fₘ afin de transiter sur le cœur de réseau et être distribué à d'autres utilisateurs présents sur d'autres sites du réseau de communication et appartenant à un groupe Gₖ.

La conversion « uplink » est traduite dans le procédé selon l'invention par une règle dite règle « uplink ».

La figure 5 schématise un exemple d'opérations 50 pour convertir du trafic entrant, flux entrants, sur un site ou « dowlink » au niveau du contrôleur 21 et du processeur de paquets 20. La règle associée est appelée « règle downlink ». Le flux multicast Fₘₑ appartenant à un groupe Gₖ entrant sur un site j est dupliqué en plusieurs flux unicast Fᵤᵢ vers les utilisateurs Ui présents sur le site j et appartenant à un groupe Gₖ. Le contrôleur peut être co-localisé avec le routeur/switch, mais par obligatoirement.

Le contrôleur 21 a notamment pour fonction d'utiliser la connaissance fournie par le gestionnaire de présence 22 ainsi que la connaissance du gestionnaire de groupe 23 afin de créer, modifier, supprimer et envoyer les règles « uplink » et « downlink » de conversion des flux au processeur de traitement 20 des paquets.

L'algorithme implémenté au niveau d'un routeur de bordure et décrit ci-dessous est exécuté à chaque fois qu'il y a une mise à jour des informations de présence ou de groupe de communications dans le système; lorsque, par exemple, un utilisateur a changé de groupe, ou que son abonnement à un groupe a changé (inscription, désinscription).

Les variables utilisées en entrée de l'algorithme sont les suivantes:
- les groupes Gi ainsi que leurs identifiants (ex : adresse multicast, port...),
- les utilisateurs Uj présents sur le site j,
- P(Uj, Gi) le sous-ensemble des utilisateurs présents sur un site j et participant aux groupes Gi.

### Génération des règles « uplink » et « downlink » sur le site i

### Pour chaque groupe de communication Gi

a. Créer la règle «downlink» du groupe : dl(Gi)
*b. Ajouter dans le filtre l'identifiant du groupe Gi (adresse multicast) à la règle «downlink» dl(Gi)*
*c. Ajouter à la règle dl(Gi) une action de duplication du paquet pour chaque utilisateur du sous-ensemble présents sur le site P(Uj, Gi)*
*d. Ajouter à la règle dl(Gi) une action de modification de l'adresse IP de destination pour chaque utilisateur P(Uj, Gi)*
*e. Ajouter à la règle dl(Gi) une action d'envoi sur le port de sortie pour chaque utilisateur P(Uj, Gi)*
*f. Ajouter à la règle dl(Gi) la suppression du paquet initial*
g. Créer la règle «uplink» du groupe : ul(Gi)
*h. Ajouter dans le filtre l'identifiant local du groupe Gi (adresse unicast du terminal ou d'une gateway fictive, numéro de port) à la règle ul(Gi)*

S'il y a plus d'un membre ou utilisateur du groupe Gi sur le même site:
*i. Ajouter à la règle ul(Gi) une action de duplication pour chaque utilisateur P(Uj, Gi)*
*j. Ajouter à la règle ul(Pi) une action de modification de l'adresse IP de destination pour chaque utilisateur P(Uj, Gi)*
*k. Ajouter à la règle ul(Gi) une action d'envoi sur le port de sortie pour chaque utilisateur P(Uj, Gi) Fin du si*

S'il y a des abonnés au groupe Gi sur d'autres sites :
*I. Ajouter une application de duplication sur le groupe multicast ul(Gi)*
*m. Ajouter à la règle ul(Gi) une action de modification de l'adresse IP de destination (multicast) pour le groupe Gi*
*n. Ajouter à la règle ul(Gi) une action d'envoi sur le port de sortie du groupe multicast Fin du si*
o. Ajouter à la règle ul(Gi) la suppression du paquet initial.

Les règles « uplink » et « downlink » élaborées au niveau du contrôleur 21 sont transmises au module processeur de paquets 20 qui va les appliquer sur les paquets entrant en fonction de la situation des utilisateurs participant au groupe de communication, situation qui est connue par le module de gestion des règles 201.

Selon une variante du procédé, les étapes h, i, j et k peuvent être répétées pour les différents utilisateurs *P(Uj, Gi)* afin que le trafic émis par un utilisateur du site ne soit pas dupliqué vers lui-même. Dans ce cas :
- le filtre de la règle établie à l'étape h sera complété avec l'identifiant de l'utilisateur Ui ;
- la duplication concernant l'utilisateur à l'étape i est retirée.
Cette variante aboutit à un nombre N de règles « uplink » pour chaque groupe Gi, N étant le nombre d'utilisateurs Ui présents sur le site et participant aux groupes Gi.

Pour connaître le nombre d'utilisateurs pour un groupe de communication présents sur les autres sites du réseau, (e.g. pour savoir s'il doit dupliquer les paquets sortant vers le cœur), plusieurs solutions sont possibles :
- sonder le protocole multicast pour savoir si la session du groupe est active,
- interroger le gestionnaire de groupe, par exemple l'applicatif implémentant le plan de contrôle de l'application voix sur IP, VoIP

L'appartenance d'un paquet à un groupe de communication Gi peut être identifiée en utilisant, par exemple :
- l'adresse multicast pour les paquets entrants,
- l'adresse unicast et le port pour les paquets sortants.

Les utilisateurs sont identifiés, par exemple, grâce à leur adresse IP dans les paquets unicast : IP source pour les paquets émis par les utilisateurs, IP destination pour ceux qui sont reçus.

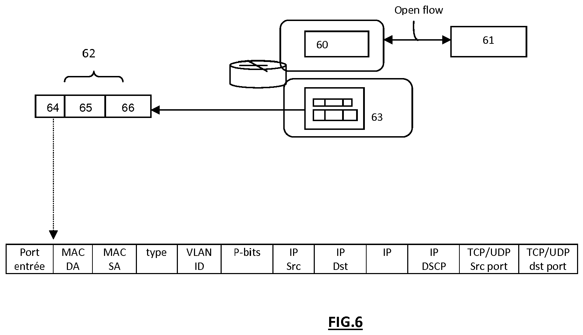

La figure 6 décrit une solution utilisant le protocole OpenFlow implémenté au niveau du module de communication permettant de pousser des règles de traitement de paquets d'un contrôleur 61 à un commutateur 60. La Figure 6 illustre la structure des règles OpenFlow stockées dans la table de commutation 63. Ces règles 62 comprennent des filtres sur les en-têtes des paquets, 64, des actions 65 (envoi vers un port de sortie, modification d'un champ d'un en-tête, supression du paquet etc.) et des statistiques 66.

Pour mémoire le protocole OpenFlow est un protocole permettant l'administration à distance de la table de traitement de flux d'un commutateur ou « switch ». Cette table de traitement contient des règles qui sont appliquées sur chacun des paquets entrant dans le switch.

Une règle « uplink » ou « downlink » contient pour un flux, les actions à appliquer sur les paquets du flux et elle est constituée de deux parties :
◆ Un filtre d'en-têtes des paquets permettant de préciser les caractéristiques des paquets de données appartenant au flux, port réseau de provenance, valeurs des différents champs dans les en-têtes,
◆ Une liste des actions à appliquer sur les paquets du flux, par exemple, la modification des champs des en-têtes du paquet, la duplication, la suppression, l'envoi sur un port réseau, les actions étant enchaînées les unes à la suite des autres.

Il est possible d'associer une priorité à chaque règle de la table. Lorsqu'un paquet entre dans le processeur de paquets, ce dernier recherche la règle correspondant au flux contenant le paquet en parcourant par exemple les règles de la table par ordre de priorité décroissante.

Un exemple de mise en œuvre du protocole OpenFlow est détaillé ci-après. Le paquet traité par une règle sera dupliqué deux fois au sein du site (avec les modifications d'en-tête requises) ainsi que vers l'extérieur :

```
    {"name":"group-1-MC-rule ", "cookie":"0", "priority":"3", "ingress-port":"1",
    "ether-type"-"0x0800", "dst-ip":"15.16.23.42","dst-port":"1987", "active":"true",
    "actions ":"set-src-mac=4:8:15:16:23:42, set-src-ip=15.16.23.42,set-dst-
    mac=BC:F6:85:D7:7A:76,set-dst-ip=4.8.15.16,set-dst-
    port=5001,output=65529, set-src-mac=4:8:15:16:23:42,set-src-
    ip=15.16.23.42,set-dst-mac=BC:F6:85:D7:7A:76,set-dst-ip=4.8.15.17,set-dst-
    port=5001,output=65529, set-src-mac=4:8:15:16:23:42,set-src-
    ip=15.16.23.42,set-dst-mac=BC:F6:85:D7:7A:76,set-dst-
    ip=224.0.0.42,output=2"}
```

La première partie correspond au groupe de communication auquel la règle s'applique (group-1-MC-rule) ainsi que la correspondance à retrouver dans les en-têtes du paquet (adresse IP, port, ...). La seconde partie correspond aux actions à effectuer sur le paquet; il s'agit des modifications de l'en-tête (set-*) et d'envoi sur un port de sortie (output=*). Dans le protocole OpenFlow, il n'y a pas besoin d'indiquer explicitement une action de duplication : le paquet initial est dupliqué avant chaque envoi sur l'interface de sortie (action output). De même, le paquet initial est automatiquement supprimé.

Selon une variante de réalisation, le procédé propose une gestion fine de l'alternat. Les systèmes gérant les communications de groupe utilisent un canal de contrôle pour organiser les interactions entre les usagers. Par exemple, pour la communication « appuyer pour parler » connue sous l'expression anglo-saxonne « push-to-talk », un jeton ou token est utilisé pour s'assurer qu'un seul utilisateur peut parler à la fois. Sur pression d'un bouton, par exemple, le terminal utilisateur demande le token au système de gestion. En fonction de ses droits et de son importance, le token lui est attribué ou non.

Le procédé selon l'invention comporte, par exemple, une étape supplémentaire au niveau du processeur de paquets qui permet de bloquer le trafic unicast des utilisateurs n'ayant pas le token.

Pour cela, la règle « uplink » est mise en place uniquement pour l'utilisateur ayant le token et sera mise en place uniquement sur le site où se trouve l'utilisateur qui possède le token. Une règle « uplink » de filtrage avec une priorité plus basse est mise en place afin que tout le trafic entrant en unicast et n'ayant pas déjà été traité par la règle précédente soit détruit.

L'invention permet également, si l'administrateur le souhaite, de dupliquer le trafic sur un port dit miroir. Cela peut être utilisé pour enregistrer le trafic. Pour la mise en œuvre avec le protocole OpenFlow, il suffit par exemple de rajouter aux règles obtenues par le procédé selon l'invention une action supplémentaire afin de dupliquer le trafic vers ce port miroir.

L'invention fournit un mécanisme de traitement de paquets, configuré en fonction de la connaissance de la présence des utilisateurs sur les sites et de leur participation aux groupes de communication. Elle permet de gérer un grand nombre de paquets directement sans passer par un serveur de contenu ce qui présente un avantage en termes de performances.

## Revendications

1. - Système de gestion de la conversion unicast/multicast pour les communications multimédia de groupe dans un réseau de communication (1) comportant un ou plusieurs sites (11, 12, 13) et comprenant au moins deux utilisateurs (U₁, U₂), les utilisateurs communiquant selon un mode unicast au sein d'un site, un ou plusieurs routeurs de bordure (Rᵢ), un réseau central (10) agencé pour distribuer les flux de données entre les différents sites **caractérisé en ce qu'**il comporte au moins les éléments suivants :
✔ Au niveau d'un site (11, 12, 13) et d'un routeur de bordure (Rᵢ),
• Un module de gestion de présence (22) des utilisateurs (Ui) présents sur le site,
• Un module de gestion de groupes (23) adapté à gérer l'appartenance d'un utilisateur à un groupe de communication Gi,
• Un contrôleur (21) émettant des règles de conversion flux entrant « uplink », flux sortant « downlink », à appliquer au niveau des données d'un flux entrant ou sortant d'un site et destinées à un ou plusieurs utilisateurs appartenant à un même groupe de communication Gi, lesdites règles de conversion comprenant des actions de modification de l'adresse de destination de l'en-tête IP et de l'adresse de l'en-tête MAC pour chaque utilisateur appartenant à un instant à un groupe de communication et des actions de duplication du flux en un ou plusieurs flux unicast en fonction du nombre d'utilisateurs présents sur ce même site et des actions de conversion en flux multicast du flux unicast émis par l'utilisateur pour transiter sur le cœur du réseau vers un ou plusieurs utilisateurs appartenant au même groupe de communication et présents sur des sites différents du site donné,
• Un module (20) adapté à appliquer les règles de conversion émises « uplink, downlink », sur des données multimédia émises par un premier utilisateur (U₁) avant de diffuser les données modifiées selon les règles vers un ou plusieurs utilisateurs (Ui) appartenant au même groupe de communication Gi que le premier utilisateur (U₁) émetteur du flux,
✔ Au niveau du nœud de réseau central (10),
De moyens de transmission multicast (15) des flux de données multimédia d'un site vers un autre site.

2. - Système selon la revendication 1 **caractérisé en ce que** :
✔ le module de contrôle (21) est composé:
• D'une interface de gestion «API » (210), pour la communication avec le gestionnaire de présence (22) et le gestionnaire de groupes (23),
• D'un module de configuration (211) exécutant l'algorithme de génération des règles,
• D'un module de communication (212) adapté à communiquer avec le module de traitement (20) et lui transmettre les règles de modification des flux, et **en ce que**
✔ le module de traitement (20) est composé :
• D'un module de communication (202) avec le contrôleur,
• D'un module de gestion des règles de modification (201) décrivant l'ensemble des actions à effectuer sur les flux,
• D'un module (200) de filtre et d'actions sur les flux.

3. - Système selon l'une des revendications précédentes **caractérisé en ce que** les règles générées sont la suppression du flux de données, l'envoi d'un flux de données sur un port de sortie.

4. - Système selon l'une des revendications précédentes **caractérisé en ce que** le module de traitement (20) comporte une table de règles avec des degrés de priorité.

5. - Système selon l'une des revendications précédentes **caractérisé en ce que** les flux sont composés de paquets IP.

6. - Système selon l'une des revendications précédentes **caractérisé en ce qu'**il implémente le protocole OpenFlow.

7. - Procédé de gestion de la conversion unicast/multicast pour les communications multimédia de groupe dans un réseau de communication (1) comportant un ou plusieurs sites, comprenant au moins deux utilisateurs (U₁, U₂) communiquant selon un mode unicast au sein d'un site, un réseau central (10) agencé pour distribuer des flux de données multimédia entre les différents sites (11, 12, 13), les utilisateurs (Ui) appartenant à un instant donné à un groupe de communication Gi, les sites communiquant au moyen de routeurs (Ri) **caractérisé en ce qu'**il comporte au moins les étapes suivantes :
• Générer un ensemble de règles de conversion d'un flux sortant ou « uplink » d'un site et d'un flux entrant ou « downlink » au niveau d'un site j donné,
• Appliquer une règle de conversion du flux entrant « uplink » sur un flux unicast émis par un utilisateur présent sur un site j afin de modifier l'adresse de destination de l'en-tête IP et l'adresse de l'en-tête MAC de chaque utilisateur appartenant à un instant à un groupe de communication et dupliquer le flux en un ou plusieurs flux unicast en fonction du nombre d'utilisateurs présents sur ce même site et convertir en flux multicast le flux unicast émis par l'utilisateur pour transiter sur le cœur du réseau vers un ou plusieurs utilisateurs appartenant au même groupe de communication et présents sur des sites différents du site donné,
• Appliquer une règle de conversion « downlink » sur un flux multicast entrant sur le site, afin de dupliquer en plusieurs flux unicast le flux multicast entrant vers un ou plusieurs utilisateurs présents sur le site.

8. - Procédé selon la revendication 7 **caractérisé en ce que** pour générer la règle de conversion « downlink » et la règle de conversion « uplink » pour un groupe de communication donné Gi on exécute les étapes suivantes :
*Pour chaque groupe de communication Gi*
a. Créer la règle « downlink » du groupe : dl(Gi)
*b. Ajouter dans le filtre l'identifiant du groupe Gi (adresse multicast) à la règle «downlink» dl(Gi)*
*c. Ajouter à la règle dl(Gi) une action de duplication du paquet pour chaque utilisateur du sous-ensemble présents sur le site P(Uj, Gi)*
*d. Ajouter à la règle dl(Gi) une action de modification de l'adresse IP de destination pour chaque utilisateur P(Uj, Gi)*
*e. Ajouter à la règle dl(Gi) une action d'envoi sur le port de sortie pour chaque utilisateur P(Uj, Gi)*
*f. Ajouter à la règle dl(Gi) la suppression du paquet initial*
g. Créer la règle «uplink» du groupe : ul(Gi)
*h. Ajouter dans le filtre l'identifiant local du groupe Gi (adresse unicast du terminal ou d'une gateway fictive, numéro de port) à la règle ul(Gi)* S'il y a plus d'un membre du groupe Gi sur le même site:
*i. Ajouter à la règle ul(Gi) une action de duplication pour chaque utilisateur P(Uj, Gi)*
*j. Ajouter à la règle ul(Pi) une action de modification de l'adresse IP de destination pour chaque utilisateur P(Uj, Gi)*
*k. Ajouter à la règle ul(Gi) une action d'envoi sur le port de sortie pour chaque utilisateur P(Uj, Gi)*
*Fin du si*
S'il y a des abonnés au groupe Gi sur d'autres sites :
*l. Ajouter une application de duplication sur le groupe multicast ul(Gi)*
*m. Ajouter à la règle ul(Gi) une action de modification de l'adresse IP de destination (multicast) pour le groupe Gi*
*n. à la règle ul(Gi) une action d'envoi sur le port de sortie du groupe multicast*
*Fin du si*
o. Ajouter à la règle ul(Gi) la suppression du paquet initial.

9. - Procédé selon l'une des revendications 7 et 8 **caractérisé en ce qu'**il comporte une étape où l'on utilise la règle « uplink » uniquement sur le site où un utilisateur possède le jeton permettant la prise de parole dans un réseau de communication « appuyer pour parler » PTT.

10. - Procédé selon l'une des revendications 8 à 9 **caractérisé en ce que** les flux de données multimédia sont des paquets IP.

11. - Procédé selon l'une des revendications 8 à 10 **caractérisé en ce que** l'on utilise le protocole OpenFlow.

## Patentansprüche

1. Verwaltungssystem für die Unicast-/Multicast-Umwandlung für Multimedia-Gruppenkommunikationen in einem Kommunikationsnetz (1), aufweisend eine oder mehrere Websites (11, 12, 13) und umfassend mindestens zwei Benutzer (U₁, U₂), wobei die Benutzer gemäß einem Unicast-Modus innerhalb einer Website kommunizieren, einen oder mehrere Edge-Router (Rᵢ), ein zentrales Netz (10), das dafür eingerichtet ist, den Datenfluss zwischen den verschiedenen Websites zu verteilen, **dadurch gekennzeichnet, dass** es mindestens die folgenden Elemente aufweist:
✔ seitens einer Website (11, 12, 13) und eines Edge-Routers (Rᵢ),
• ein Präsenzverwaltungsmodul (22) der Benutzer (Ui), die sich auf der Website befinden,
• ein Gruppenverwaltungsmodul (23), das dafür geeignet ist, die Zugehörigkeit eines Benutzers zu einer Kommunikationsgruppe Gi zu verwalten,
• einen Controller (21), der Umwandlungsregeln für eingehende "Uplink"-Flüsse und abgehende "Downlink"-Flüsse ausgibt, die auf die Daten eines Flusses anzuwenden sind, der an einer Website ankommt oder von dieser abgeht, und die für einen oder mehrere Benutzer bestimmt sind, die einer selben Kommunikationsgruppe Gi angehören, wobei die Umwandlungsregeln Aktionen zur Modifikation der Zieladresse des IP-Headers und der Adresse des MAC-Headers für jeden Benutzer, der zu einem Zeitpunkt einer Kommunikationsgruppe angehört, und Aktionen zur Doppelung des Flusses in einem oder mehreren Unicast-Flüssen in Abhängigkeit von der Anzahl der Benutzer, die sich auf dieser selben Website befinden, und Aktionen zum Umwandeln des von dem Benutzer gesendeten Unicast-Flusses in einen Multicast-Fluss zum Übertragen über den Netzknoten zu einem oder mehreren Benutzern, die derselben Kommunikationsgruppe angehören und sich auf verschiedenen Websites der gegebenen Website befinden, umfassen,
• ein Modul (20), das dafür geeignet ist, die für "Uplink, Downlink" gesendeten Umwandlungsregeln auf Multimedia-Daten anzuwenden, die von einem ersten Benutzer (U₁) gesendet werden, bevor die modifizierten Daten gemäß den Regeln an einen oder mehrere Benutzer (Ui) gesendet werden, der oder die derselben Kommunikationsgruppe Gi angehört oder angehören wie der erste Benutzer (U₁), der den Fluss gesendet hat,
✔ seitens des zentralen Netzknotens (10),
Multicast-Übertragungsmittel (15) der Multimedia-Datenflüsse von einer Website zu einer anderen Website.

2. System nach Anspruch 1, **dadurch gekennzeichnet, dass**
✔ das Steuermodul (21) zusammengesetzt ist aus
• einer "API"-Verwaltungsschnittstelle (210) für die Kommunikation mit dem Präsenzverwalter (22) und dem Gruppenverwalter (23),
• einem Konfigurationsmodul (211), das den Algorithmus für die Erstellung der Regeln ausführt,
• einem Kommunikationsmodul (212), das dafür geeignet ist, mit dem Verarbeitungsmodul (20) zu kommunizieren und an dieses die Flussmodifikationsregeln zu übertragen, und dass
✔ das Verarbeitungsmodul (20) zusammengesetzt ist aus
• einem Kommunikationsmodul (202) mit dem Controller,
• einem Verwaltungsmodul für die Modifikationsregeln (201), das die gesamten, an den Flüssen vorzunehmenden Aktionen beschreibt,
• einem Filter- und Aktionsmodul (200) für die Flüsse.

3. System nach einem der vorhergehenden Ansprüche, **dadurch gekennzeichnet, dass** die erstellten Regeln die Löschung des Datenflusses, das Schicken eines Datenflusses an einen Ausgangsanschluss sind.

4. System nach einem der vorhergehenden Ansprüche, **dadurch gekennzeichnet, dass** das Verarbeitungsmodul (20) eine Regeltabelle mit Prioritätsstufen aufweist.

5. System nach einem der vorhergehenden Ansprüche, **dadurch gekennzeichnet, dass** die Flüsse aus IP-Paketen zusammengesetzt sind.

6. System nach einem der vorhergehenden Ansprüche, **dadurch gekennzeichnet, dass** es das OpenFLow-Protokoll implementiert.

7. Verwaltungsverfahren für die Unicast-/Multicast-Umwandlung für Multimedia-Gruppenkommunikationen in einem Kommunikationsnetz (1), aufweisend eine oder mehrere Websites, umfassend mindestens zwei Benutzer (U₁, U₂), die gemäß einem Unicast-Modus innerhalb einer Website kommunizieren, ein zentrales Netz (10), das dafür eingerichtet ist, Multimedia-Datenflüsse zwischen den verschiedenen Websites (11, 12, 13) zu verteilen, wobei die Benutzer (Ui) zu einem gegebenen Zeitpunkt einer Kommunikationsgruppe Gi angehören, wobei die Websites mithilfe von Routern (Ri) kommunizieren, **dadurch gekennzeichnet, dass** es mindestens die folgenden Schritte aufweist:
• Erstellen eines Regelsatzes zum Umwandeln eines abgehenden, oder "Uplink-"Flusses, einer Website und eines eingehenden, oder "Downlink"-Flusses, an einer gegebenen Website j,
• Anwenden einer Umwandlungsregel des eingehenden "Uplink"-Flusses auf einen Unicast-Fluss, der von einem sich auf einer Website j befindenden Benutzer gesendet wird, um die Zieladresse des IP-Headers und die Adresse des MAC-Headers jedes Benutzers zu modifizieren, der zu einem Zeitpunkt einer Kommunikationsgruppe angehört, und Doppeln des Flusses in einen oder mehrere Unicast-Flüsse in Abhängigkeit von der Anzahl der Benutzer, die sich auf dieser selben Website befinden, und Umwandeln des von dem Benutzer gesendeten Unicast-Flusses in einen Multicast-Fluss zum Übertragen auf dem Netzknoten zu einem oder mehreren Benutzern, die derselben Kommunikationsgruppe angehören und sich auf verschiedenen Websites der gegebenen Website befinden,
• Anwenden einer "Downlink"-Umwandlungsregel an einem Multicast-Fluss, der auf der Website eingeht, um den eingehenden Multicast-Fluss in mehrere Unicast-Flüsse zu einem oder mehreren, sich auf der Website befindenden Benutzer zu doppeln.

8. Verfahren nach Anspruch 7, **dadurch gekennzeichnet, dass** zum Erstellen der "Downlink"-Umwandlungsregel und der "Uplink"-Umwandlungsregel für eine gegebene Kommunikationsgruppe Gi die folgenden Schritte ausgeführt werden:
für jede Kommunikationsgruppe Gi
a. Erstellen der "Downlink"-Regel der Gruppe: dl(Gi)
b. Hinzufügen, in dem Filter, der Kennung der Gruppe Gi (Multicast-Adresse) zur "Downlink"-Regel dl(Gi)
c. Hinzufügen zu der Regel dl(Gi) einer Doppelungsaktion des Pakets für jeden Benutzer der Untergruppe, der sich auf der Website P(Uj, Gi) befindet
d. Hinzufügen zu der Regel dl(Gi) einer Aktion zur Modifizierung der IP-Zieladresse für jeden Benutzer P(Uj, Gi)
e. Hinzufügen zu der Regel dl(Gi) einer Aktion zum Senden an den Ausgangsanschluss für jeden Benutzer P(Uj, Gi)
f. Hinzufügen zu der Regel dl(Gi) der Löschung des Anfangspakets
g. Erstellen der "Uplink"-Regel der Gruppe: ul(Gi)
h. Hinzufügen, in dem Filter, der lokalen Kennung der Gruppe Gi (Unicast-Adresse des Endgeräts oder eines fiktiven Gateways, Anschlussnummer) zu der Regel ul(Gi)
Wenn es mehr als ein Mitglied der Gruppe Gi auf derselben Website gibt:
i. Hinzufügen zu der Regel ul(Gi) einer Doppelungsaktion für jeden Benutzer P(Uj, Gi)
j. Hinzufügen zu der Regel ul(Pi) einer Aktion zur Modifizierung der IP-Zieladresse für jeden Benutzer P(Uj, Gi)
k. Hinzufügen zu der Regel ul(Gi) einer Aktion zum Senden an den Ausgangsanschluss für jeden Benutzer P(Uj, Gi)
Bedingungsende
Wenn es auf anderen Websites Abonnenten der Gruppe Gi gibt:
l. Hinzufügen einer Doppelungsanwendung auf die Multicast-Gruppe ul(Gi)
m. Hinzufügen zu der Regel ul(Gi) einer Aktion zur Modifizierung der IP-Zieladresse (Multicast) für die Gruppe Gi
n. zu der Regel ul(Gi) einer Aktion zum Senden an den Ausgangsanschluss der Multicast-Gruppe
Bedingungsende
o. Hinzufügen zu der Regel ul(Gi) der Löschung des Anfangspakets.

9. Verfahren nach einem der Ansprüche 7 und 8, **dadurch gekennzeichnet, dass** es einen Schritt umfasst, in dem die "Uplink"-Regel nur auf der Website verwendet wird, bei der ein Benutzer das Token besitzt, das die Wortmeldung in einem Kommunikationsnetz erlaubt, "Zum Sprechen drücken", PTT.

10. Verfahren nach einem der Ansprüche 8 bis 9, **dadurch gekennzeichnet, dass** die Multimedia-Datenflüsse IP-Pakete sind.

11. Verfahren nach einem der Ansprüche 8 bis 10, **dadurch gekennzeichnet, dass** das OpenFlow-Protokoll verwendet wird.

## Claims

1. System for managing unicast/multicast conversion for group multimedia communications in a communication network (1) having one or more sites (11, 12, 13) and comprising at least two users (U₁, U₂), the users communicating according to a unicast mode within a site, one or more edge routers (Rᵢ), a central network (10) organized to distribute the data streams between the different sites, **characterized in that** it comprises at least the following elements:
✔ At a site (11, 12, 13) and an edge router (Rᵢ),
• A presence management module (22) of the users (Ui) present on the site,
• A group management module (23) adapted for managing the membership of a user in a communication group Gi,
• A control module (21) transmitting "uplink" incoming stream and "downlink" outgoing stream conversion rules, to be applied to data of a stream entering or leaving a site and intended for one or more users belonging to a same communication group Gi, said conversion rules comprising actions for modifying the destination address of the IP header and the address of the MAC header for each user belonging at a time to a communication group and actions for duplication of the stream into one or more unicast streams depending on the number of users present on this same site and actions for conversion of the unicast stream transmitted by the user into multicast streams to transit over the core of the network to one or more users belonging to the same communication group and present on different sites from the given site.
• A module (20) adapted to apply the transmitted "uplink, downlink" conversion rules to multimedia data transmitted by a first user (U₁) before broadcasting the data modified according to the rules to one or more users (Ui) belonging to the same communication group Gi as the first user (U₁) transmitting the stream,
✔ At the central network node (10),
Means for multicast transmission (15) of the multimedia data streams from one site to another site.

2. System according to Claim 1, **characterized in that**:
✔ the control module (21) is made up:
• Of an "API" management interface (210), for the communication with the presence manager (22) and the group manager (23),
• Of a configuration module (211) executing the rules generation algorithm,
• Of a communication module (212) adapted to communicate with the processing module (20) and transmit to it the stream modification rules, and **in that**
✔ the processing module (20) is made up:
• Of a module for communication (202) with the controller,
• Of a module for managing modification rules (201) describing all the actions to be performed on the streams,
• Of a module (200) for filtering and actions on the streams.

3. System according to one of the preceding claims, **characterized in that** the rules generated are deletion of the data stream, sending of a data stream on an output port.

4. System according to one of the preceding claims, **characterized in that** the processing module (20) has a table of rules with degrees of priority.

5. System according to one of the preceding claims, **characterized in that** the streams are made up of IP packets.

6. System according to one of the preceding claims, **characterized in that** it implements the OpenFlow protocol.

7. Method for managing unicast/multicast conversion for the group multimedia communications in a communication network (1) having one or more sites, comprising at least two users (U₁, U₂) communicating according to a unicast mode within a site, a central network (10) organized to distribute multimedia data streams between the different sites (11, 12, 13), the users (Ui) belonging at a given instant to a communication group Gi, the sites communicating by means of routers (Ri), **characterized in that** it comprises at least the following steps:
• Generating a set of rules for conversion of an outgoing or "uplink" stream from a site and an incoming or "downlink" stream at a given site j,
• Applying an conversion rule of the incoming "uplink" stream to a unicast stream transmitted by a user present on a site j in order to modify the destination IP address and the address of the MAC header of each user belonging at a time to a communication group and duplicating the stream into one or more unicast streams based on the number of users present on this same site and converting into multicast streams the unicast stream transmitted by the user to transit over the core of the network to one or more users belonging to the same communication group and present on different sites from the given site,
• Applying a "downlink" conversion rule to a multicast stream incoming to the site, in order to duplicate into a number of unicast streams the multicast stream incoming to one or more users present on the site.

8. Method according to Claim 7, **characterized in that**, to generate the "downlink" conversion rule and the "uplink" conversion rule for a given communication group Gi, the following steps are executed:
For each communication group Gi
a. Creating the "downlink" rule for the group: dl(Gi)
b. Adding to the filter the identifier of the group Gi (multicast address) to the "downlink" rule dl(Gi)
c. Adding to the rule dl(Gi) an action to duplicate the packet for each user of the subset present on the site P(Uj, Gi)
d. Adding to the rule dl(Gi) an action to modify the destination IP address for each user P(Uj, Gi)
e. Adding to the rule dl(Gi) an action to send to the output port for each user P(Uj, Gi)
f. Adding to the rule dl(Gi) the deletion of the initial packet
g. Creating the "uplink" rule for the group: ul(Gi)
h. Adding in the filter the local identifier of the group Gi (unicast address of the terminal or of a dummy gateway, port number) with the rule ul(Gi)
If there are more than one member of the group Gi on the same site:
i. Adding to the rule ul(Gi) an action to duplicate for each user P(Uj, Gi)
j. Adding to the rule ul(Pi) an action to modify the destination IP address for each user P(Uj, Gi)
k. Adding to the rule ul(Gi) an action to send to the output port for each user P(Uj, Gi)
End if
If there are subscribers to the group Gi on other sites:
l. Adding a duplication application on the multicast group ul(Gi)
m. Adding to the rule ul(Gi) an action to modify the destination (multicast) IP address for the group Gi
n. to the rule ul(Gi) an action to send to the output port of the multicast group End if
o. Adding to the rule ul(Gi) the deletion of the initial packet.

9. Method according to one of Claims 7 and 8, **characterized in that** it comprises a step in which the "uplink" rule is used only on the site where a user has the token making it possible to take a turn to talk in a communication network "press to talk" PTT.

10. Method according to one of Claims 8 and 9, **characterized in that** the multimedia data streams are IP packets.

11. Method according to one of Claims 8 to 10, **characterized in that** the OpenFlow protocol is used.
